# EUROPEAN PATENT SPECIFICATION

(11) **EP 4 043 977 B1**
(45) Date of publication and mention of the grant of the patent: **17.01.2024**
(21) Application number: 20873547.2
(22) Date of filing: 29.09.2020
(51) Int. Cl.: G05B 23/02

(54) **ALARM REPORTING DEVICE AND ALARM REPORTING METHOD**
ALARMMELDEVORRICHTUNG UND ALARMMELDEVERFAHREN
DISPOSITIF DE DÉCLARATION D'ALERTE ET PROCÉDÉ DE DÉCLARATION D'ALERTE

(30) Priority: 08.10.2019 JP 2019185201
(43) Date of publication of application: 17.08.2022
(73) Proprietor: Amada Co., Ltd., Isehara-shi, Kanagawa 259-1196 (JP)
(72) Inventor: SANO Toshiaki, Isehara-shi, Kanagawa 259-1196 (JP); MA Qianli, Isehara-shi, Kanagawa 259-1196 (JP)
(74) Representative: Grünecker Patent- und Rechtsanwälte PartG mbB
(86) International application number: PCT/JP2020/036761
(87) International publication number: WO 2021/070667

(56) References cited:
- JP-A- H06 150 179
- JP-A- 2013 080 291
- JP-A- 2013 080 291
- JP-A- 2018 120 456
- JP-A- 2018 120 456

## Description

### Technical Field

The present disclosure relates to an alarm reporting apparatus and an alarm reporting method.

### Background Art

A multitude of systems have been widely used that each monitors a plurality of machines from a remote monitoring apparatus via a communication network. In such systems, an enormous number of pieces of alarm information is reported when an abnormality occurs in each machine. Therefore, a variety of processing is performed in order to efficiently deal with these enormous pieces of alarm information.

For example, the alarm information generated in each machine is accumulated, and the history information thereof is transmitted to the monitoring apparatus once a day. As a result, the machine is prevented from communicating with the monitoring apparatus each time the alarm information is generated, and the communication load in the system is reduced. In a processing machine described in Patent Literature 1, it is possible to transmit the history information of the generated alarm information to the monitoring apparatus once a day.

### Citation List

### Patent Literature

Patent Literature 1: Japanese Patent Application Laid-Open Publication No. 2003-186509
JP 2013 080291 A1 relates to monitoring control for abnormality occurrence information. In particular, when information on an abnormality that has occurred in a field device is input, an alarm type is classified as an abnormality that requires a response within a certain period of time, an abnormality that requires an immediate response, or an error.
JP 2018 120456 A relates to alarm display. In particular, a database stores sets of predetermined events in accordance with running patterns of devices. For a gas turbine of a power plant, the running patterns are classified into an activation time, a partial load running time, a rated operation time, a stopping time of the gas turbine. The database includes a table where "a necessity to check every time" is set. When the events occur in monitoring target devices, this is indicated by alarm information, and alarm display information is displayed.

### Summary

If the history information of the alarm is transmitted from each machine once a day as described above, it may take time from the occurrence of an abnormality to the reporting to a maintenance vendor. If this is the case, it may not be possible to quickly respond to an abnormality of high importance, which may hinder the operation of the machine.

It is an object of the present disclosure to provide an alarm reporting apparatus and an alarm reporting method capable of reporting an abnormality related to a machine according to a degree of importance or a resolution status of the abnormal state.

According to a first aspect of one or more embodiments, an alarm reporting apparatus is provided that is connectable to a machine to be monitored, the machine being configured to generate, when an abnormality occurs, alarm information added with abnormality identification information for identifying a content of the abnormality and an occurrence time at which the abnormality has occurred, the alarm reporting apparatus including: a monitoring alarm information storage device configured to store reporting setting information for setting whether an abnormality is to be constantly reported for reporting an alarm to a monitoring apparatus regardless of whether or not the machine is during operation, or the abnormality is to be reported during operation for reporting the alarm to the monitoring apparatus only when the machine is during operation, the reporting setting information being set in advance for each abnormality identification information, and a monitoring time after the abnormality has occurred; a reporting necessity determination unit configured to, when an abnormality occurs in the machine to be monitored and the alarm information generated by the machine is acquired, determine that an alarm reporting is necessary regardless of whether or not the machine is during operation if the abnormality occurring in the machine is an abnormality to be constantly reported based on the abnormality identification information added to the alarm information and the reporting setting information stored in the monitoring alarm information storage device, determine that the alarm reporting is not necessary if the abnormality occurring in the machine is an abnormality to be reported during operation and the machine is not during operation based on the abnormality identification information and the occurrence time added to the alarm information, and the reporting setting information and the monitoring time stored in the monitoring alarm information storage device, determine that the alarm reporting is not necessary if the abnormality occurring in the machine is an abnormality to be reported during operation, the machine is during operation, and an elapsed time from the occurrence of the abnormality has not exceeded a set monitoring time, and determine that the alarm reporting is necessary if the abnormality occurring in the machine is an abnormality to be reported during operation, the machine is during operation, and the elapsed time from the occurrence of the abnormality has exceeded the set monitoring time; and a reporting unit configured to report the alarm to notify the monitoring apparatus, only when it is determined by the reporting necessity determination unit that the alarm reporting is necessary, that an abnormality has occurred in the machine to be monitored.

According to a second aspect of the one or more embodiments, an alarm reporting method is provided that includes, by an alarm reporting apparatus connected to a machine to be monitored, the machine being configured to generate, when an abnormality occurs, alarm information added with abnormality identification information for identifying a content of the abnormality and an occurrence time at which the abnormality has occurred, the alarm reporting apparatus including a monitoring alarm information storage device configured to store reporting setting information for setting whether an abnormality is to be constantly reported for reporting an alarm to a monitoring apparatus regardless of whether or not the machine is during operation, or the abnormality is to be reported during operation for reporting the alarm to the monitoring apparatus only when the machine is during operation, the reporting setting information being set in advance for each abnormality identification information, and a monitoring time after the abnormality has occurred, when an abnormality occurs in the machine to be monitored and the alarm information generated by the machine is acquired, determining that an alarm reporting is necessary regardless of whether or not the machine is during operation if the abnormality occurring in the machine is an abnormality to be constantly reported based on the abnormality identification information added to the alarm information and the reporting setting information stored in the monitoring alarm information storage device, determining that the alarm reporting is not necessary if the abnormality occurring in the machine is an abnormality to be reported during operation and the machine is not during operation based on the abnormality identification information and the occurrence time added to the alarm information, and the reporting setting information and the monitoring time stored in the monitoring alarm information storage device, determining that the alarm reporting is not necessary if the abnormality occurring in the machine is an abnormality to be reported during operation, the machine is during operation, and an elapsed time from the occurrence of the abnormality has not exceeded a set monitoring time, determining that the alarm reporting is necessary if the abnormality occurring in the machine is an abnormality to be reported during operation, the machine is during operation, and the elapsed time from the occurrence of the abnormality has exceeded the set monitoring time, and reporting the alarm to notify the monitoring apparatus, only when it is determined that the alarm reporting is necessary, that an abnormality has occurred in the machine to be monitored.

According to the one or more embodiments, an abnormality related to a machine can be reported by a method of reporting according to the degree of importance or the resolution status of the abnormal state.

### Brief Description of Drawings

[Figure 1] Figure 1 is an overall view showing a configuration of a machine monitoring system using an alarm reporting apparatus of one embodiment.
[Figure 2] Figure 2 shows an example of registration information related to alarm information to be monitored, which is stored in a monitoring alarm information storage device of the alarm reporting apparatus of one embodiment.
[Figure 3] Figure 3 is a flowchart showing processing executed by the alarm reporting apparatus of one embodiment.

### Description of Embodiment

Hereinafter, a machine monitoring system using an alarm reporting apparatus according to one embodiment will be described with reference to the attached drawings. The machine monitoring system according to the present embodiment is a system that monitors a machine installed on a user side from a monitoring apparatus installed on a maintenance vendor side.

### <Configuration of machine monitoring system according to one embodiment>

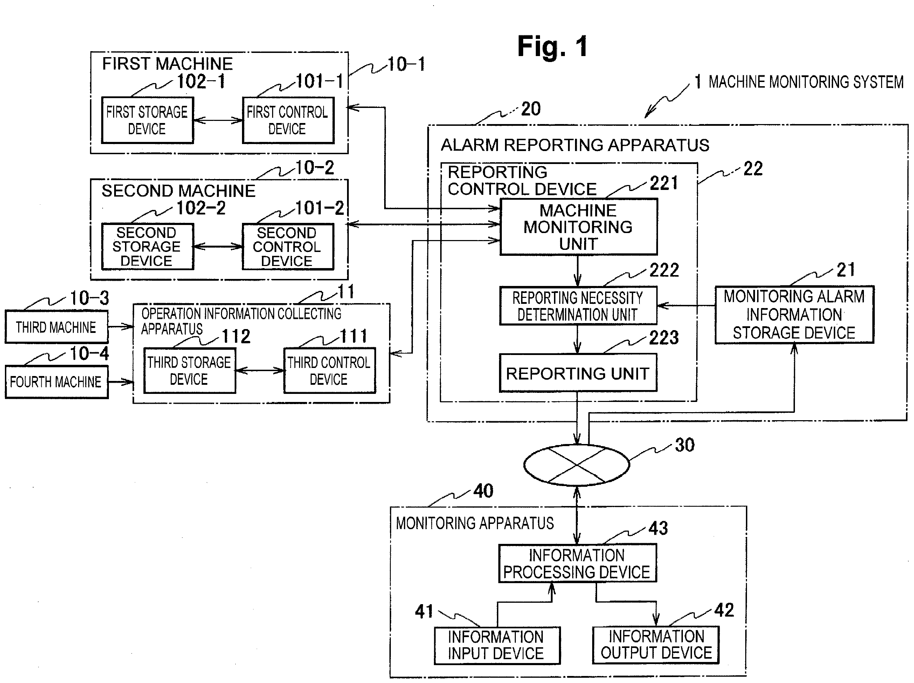

In Figure 1, a machine monitoring system 1 is provided with four machines to be monitored (a first machine 10-1, a second machine 10-2, a third machine 10-3, and a fourth machine 10-4), an operation information collecting apparatus 11, an alarm reporting apparatus 20, and a monitoring apparatus 40 connected to the alarm reporting apparatus 20 via a communication network 30.

In Figure 1, the four machines (the first machine 10-1 to the fourth machine 10-4) are shown as machines to be monitored by the machine monitoring system 1, but the number of machines to be monitored is not limited to this number. A smaller number or a larger number of machines may be configured as the machines to be monitored. The operation information collecting apparatus 11 and the alarm reporting apparatus 20 are installed on the user side having the first machine 10-1 to the fourth machine 10-4. The monitoring apparatus 40 is installed on the maintenance vendor side that monitors the first machine 10-1 to the fourth machine 10-4.

The first machine 10-1 to the fourth machine 10-4 perform processing such as cutting, welding, or bending of a sheet metal, for example. The first machine 10-1 includes a first control device 101-1 and a first storage device 102-1. The first control device 101-1 controls an operation of the first machine 10-1 and detects an abnormality that has occurred. Further, when the first control device 101-1 detects the occurrence of an abnormality in the first machine 10-1, the first control device 101-1 generates alarm information to which an alarm number, which is abnormality identification information for identifying a content of the abnormality that has occurred, and information of an abnormality occurrence time are added as log information.

The first storage device 102-1 stores an operation file D1 and an alarm file E1. The operation file D1 stores information (operation status information) indicating a current operation status (during operation/stopped) of the first machine 10-1 by the first control device 101-1. The alarm file E1 stores the alarm information generated by the first control device 101-1.

The second machine 10-2 includes a second control device 101-2 and a second storage device 102-2. The second control device 101-2 controls an operation of the second machine 10-2, detects an abnormality that has occurred, and generates corresponding alarm information. The second storage device 102-2 stores an operation file D2 that stores current operation status information of the second machine 10-2 and an alarm file E2 that stores the alarm information generated by the second control device 101-2.

The third machine 10-3 and the fourth machine 10-4 do not possess the function of detecting the abnormality in the machine, the function of generating the alarm information, the function of storing the operation status information, and the function of storing the alarm information, which are possessed by the first machine 10-1 and the second machine 10-2 described above.

The operation information collecting apparatus 11 is connected to the third machine 10-3 and the fourth machine 10-4, and includes a third control device 111 and a third storage device 112. The third control device 111 detects an abnormality that has occurred in the third machine 10-3 and an abnormality that has occurred in the fourth machine 10-4, and generates corresponding alarm information. The third storage device 112 stores an operation file D3 that stores current operation status information of the third machine 10-3 and the fourth machine 10-4, and an alarm file E3 that stores the alarm information generated by the third control device 111.

The alarm reporting apparatus 20 includes a monitoring alarm information storage device 21 and a reporting control device 22. The monitoring alarm information storage device 21 stores, from among the alarm information reported from the first machine 10-1 to the fourth machine 10-4, reporting setting information related to the alarm information having the abnormality identification information to be monitored and a monitoring time after the occurrence of the abnormality for each combination of a model of the machine to be monitored and the alarm number. The reporting setting information is information that sets whether the abnormality is to be constantly reported in which an alarm is reported to the monitoring apparatus 40 regardless of whether or not the corresponding machine is during operation, or to be reported during operation in which the alarm is reported to the monitoring apparatus 40 only when the machine is during operation.

The reporting control device 22 includes a machine monitoring unit 221, a reporting necessity determination unit 222, and a reporting unit 223. The machine monitoring unit 221 accesses the alarm file D1, the alarm file D2, and the alarm file D3 at predetermined time intervals, and detects the alarm information for which an abnormal state has not been resolved.

The reporting necessity determination unit 222 determines a necessity of alarm reporting based on the log information added to the alarm information detected by the machine monitoring unit 221, the current operation status information of the corresponding machine, and the information stored in the monitoring alarm information storage device 21. When the reporting necessity determination unit 222 determines that the alarm reporting is necessary, the reporting unit 223 reports an alarm to notify the monitoring apparatus 40 that an abnormality has occurred in the corresponding machine. To report an alarm means that the reporting unit 223 transmits, to the monitoring apparatus 40, the alarm information generated by the machine to be monitored.

The monitoring apparatus 40 is composed of a smart device, a personal computer, or the like, and includes an information input device 41, an information output device 42, and an information processing device 43. The information input device 41 inputs operational information by an operator. The information output device 42 is composed of, for example, a monitor, and displays display information related to the alarm reported by the alarm reporting apparatus 20.

The information processing device 43 generates the information input from the information input device 41, for example, instruction information for registering or changing information to be stored in the monitoring alarm information storage device 21 of the alarm reporting apparatus 20. The information processing device 43 transmits the generated instruction information to the alarm reporting apparatus 20. Further, the information processing device 43 causes the information output device 42 to output the information transmitted from the alarm reporting apparatus 20, for example, information related to the reported alarm.

### <Operation of machine monitoring system according to one embodiment>

Next, an operation of the machine monitoring system 1 according to the present embodiment will be described. First, in advance, the operator inputs registration information for each combination of the model of the machine to be monitored and the alarm number from the information input device 41 of the monitoring apparatus 40. The registration information input by the operator is transmitted to the alarm reporting apparatus 20 via the information processing device 43 and the communication network 30. The transmitted registration information is stored in the monitoring alarm information storage device 21 of the alarm reporting apparatus 20. The registration information stored in the monitoring alarm information storage device 21 can be changed as needed from the monitoring apparatus 40 by the operation of the operator.

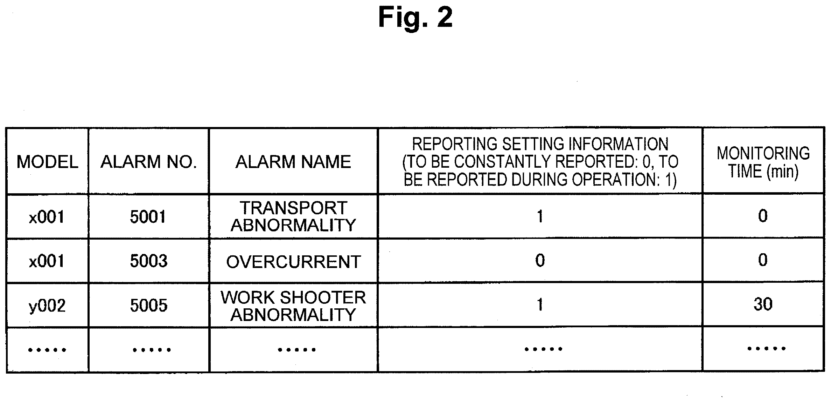

Figure 2 shows an example of the registration information stored in the monitoring alarm information storage device 21. In the registration information shown in Figure 2, reporting setting information "1 (to be reported only when the machine is during operation)" and a monitoring time "0 min" are registered for the combination of the model x001 of the machine to be monitored and the alarm No. 5001 (abnormality content "transport abnormality") that is the abnormality identification information. Reporting setting information "0 (to be constantly reported)" and the monitoring time "0 min" are registered for the combination of the model x001 of the machine to be monitored and the alarm No. 5003 (corresponding alarm name "overcurrent") that is the abnormality identification information. The reporting setting information "1 (to be reported only when during operation)" and a monitoring time "30 min" are registered for the combination of the model y002 of the machine to be monitored and the alarm No. 5005 (abnormality content "work shooter abnormality") that is the abnormality identification information. Note that the "min" indicates a minute, and "30 min" is 30 minutes. However, "0 min" is 0 seconds. In the present embodiment, the first machine 10-1 and the second machine 10-2 correspond to the model x001, and the third machine 10-3 and the fourth machine 10-4 correspond to the model y002.

When the machine monitoring system 1 is during operation, the operation status information of the first machine 10-1 is acquired by the first control device 101-1 of the first machine 10-1 at predetermined time intervals, which is then stored in the operation file D1 in the first storage device 102-1. In the same manner, the operation status information of the second machine 10-2 is acquired by the second control device 101-2 of the second machine 10-2 at predetermined time intervals, which is then stored in the operation file D2 in the second storage device 102-2. Further, the operation status information of the third machine 10-3 and the operation status information of the fourth machine 10-4 is acquired by the operation information collecting apparatus 11 at predetermined time intervals, which is then stored in the operation file D3 in the third storage device 112.

Further, when an abnormality occurs in the first machine 10-1, the first control device 101-1 generates alarm information to which the corresponding alarm number and the information of the abnormality occurrence time are added as log information, which is then stored in the alarm file E1 in the first storage device 102-1. Further, when an abnormality occurs in the second machine 10-2, the second control device 101-2 generates corresponding alarm information, which is then stored in the alarm file E2 in the second storage device 102-2.

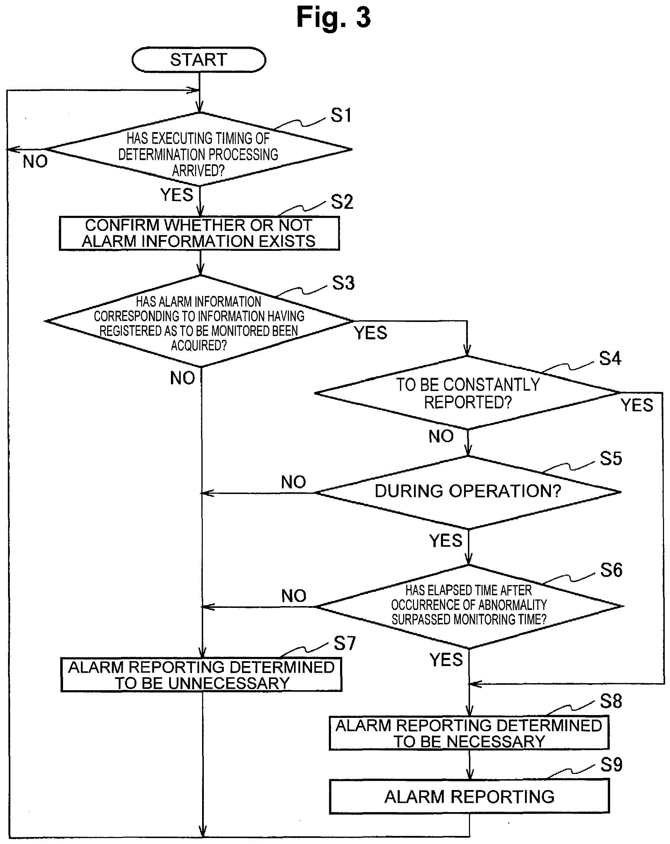

Further, when an abnormality occurs in the third machine 10-3 or the fourth machine 10-4, the third control device 111 of the operation information collecting apparatus 11 generates corresponding alarm information, which is then stored in the alarm file E3 in the third storage device 112. When the abnormal state is resolved, the alarm information stored in the alarm files E1, E2, and E3 is deleted or information indicating that the abnormality is resolved is added. Processing executed by the alarm reporting apparatus 20 for the stored alarm information is shown in the flowchart of Figure 3.

As an example, processing will be described that is executed by the alarm reporting apparatus 20 when a "work shooter abnormality" occurs in the third machine 10-3 during operation and corresponding alarm information F1 is generated by the operation information collecting apparatus 11 and stored in the alarm file E3.

In the alarm reporting apparatus 20, determination processing of alarm reporting is executed at predetermined time intervals (for example, every 30 seconds). When the execution timing of the determination processing arrives ("YES" in S1), the machine monitoring unit 221 of the reporting control device 22 accesses the alarm files E1, E2, and E3 to check if there is any alarm information for which the abnormal state has not been resolved (S2).

Here, the alarm information F1 of the third machine 10-3 stored in the alarm file E3 is detected. To the alarm information F1, the model y002 of the third machine 10-3, the alarm No. 5005, and an abnormality occurrence time "12 h 10 min 00 sec" are added as log information. When the alarm information F1 is detected, the machine monitoring unit 221 acquires the current operation status information "during operation" of the third machine 10-3 from the operation file D3 of the operation information collecting apparatus 11.

The alarm information F1 and the operation status information "during operation" acquired in the machine monitoring unit 221 is sent to the reporting necessity determination unit 222. In the reporting necessity determination unit 222, based on the log information of the alarm information F1, it is determined whether or not the alarm information F1 is the alarm information corresponding to the information registered as to be monitored in the monitoring alarm information storage device 21.

Here, it is determined that the alarm information of alarm No. 5005 related to the model y002 registered as to be monitored has been acquired ("YES" in S3). Then, based on the current operation status information of the third machine 10-3 and the information stored in the monitoring alarm information storage device 21, the necessity of reporting to the monitoring apparatus 40 is determined with respect to the alarm information F1.

Specifically, the alarm information F1 is not to be constantly reported but is to be reported only when the machine is during operation ("NO" in S4), and the third machine 10-3 is currently during operation ("YES" in S5). Therefore, it is determined that the alarm information F1 corresponds to the information to be reported. Here, if the elapsed time from the occurrence time of the abnormality "12 h 10 min 00 sec" does not exceed the monitoring time "30 min" set for the alarm No. 5005 of the alarm information F1 ("No" in S6), it is determined that the alarm reporting of the alarm information F1 is unnecessary (S7).

After it is determined that the alarm reporting is not necessary for the alarm information F1, the processing of steps S1 to S7 are repeated every time the execution timing of the determination processing arrives until the elapsed time from the occurrence time of the abnormality exceeds the monitoring time "30 min" set for the alarm information F1.

Then, when the elapsed time from the occurrence time of the abnormality exceeds the monitoring time "30 min" ("YES" in S6), it is determined that the alarm reporting is necessary for the alarm information F1 (S8).

When it is determined in the reporting necessity determination unit 222 that the alarm reporting is necessary, an alarm is reported by the reporting unit 223 to notify the monitoring apparatus 40 that a work shooter abnormality has occurred in the third machine 10-3 (S9). In reporting the alarm, for example, the alarm information generated by the third machine 10-3 is transmitted.

In other words, when it is determined that the acquired alarm information F1 is to be reported only when the third machine 10-3 is during operation, the third machine 10-3 is during operation, and the abnormality has not been resolved since the abnormality occurrence time of the alarm information F1 until the elapse of the monitoring time of the alarm information, the alarm is reported to the monitoring apparatus 40 immediately after the monitoring time of the alarm information F1 has elapsed. If the abnormality related to the alarm information F1 is resolved before the elapse of the monitoring time, the alarm information F1 is no longer detected at the subsequent execution timing of the determination processing ("NO" in S3), and the alarm is not to be reported (S7).

Further, processing will be described that is executed by the alarm reporting apparatus 20 when a "transport abnormality" occurs in the first machine 10-1 during operation and corresponding alarm information F2 is generated and stored in the alarm file E1.

In this case, when the execution timing of the determination processing of the alarm reporting arrives ("YES" in S1), the machine monitoring unit 221 detects the alarm information F2 of the first machine 10-1 stored in the alarm file E1 (S2). To the alarm information F2, the alarm No. 5001 and an abnormality occurrence time "14 h 00 min 00 sec" are added as log information. When the alarm information F2 is detected, the machine monitoring unit 221 acquires the current operation status information "during operation" of the first machine 10-1 from the operation file D1 of the first machine 10-1 and also acquires information of the model x001 of the first machine 10-1.

The acquired information is sent from the machine monitoring unit 221 to the reporting necessity determination unit 222, where it is determined that the alarm information F2 is the alarm information corresponding to the information registered as to be monitored ("YES" in S3). In the reporting necessity determination unit 222, it is further determined that the alarm information F2 is the alarm information to be reported only when the corresponding machine is during operation ("NO" in S4) and that the first machine 10-1 is currently during operation ("YES" in S5). Then, since the elapsed time from the occurrence time of the abnormality exceeds the monitoring time "0 min" set for the alarm No. 5001 of the alarm information F2 ("YES" in S6), it is determined that the alarm reporting is immediately necessary for the alarm information F2 (S8).

When it is determined in the reporting necessity determination unit 222 that the alarm reporting is necessary, an alarm is reported by the reporting unit 223 to notify the monitoring apparatus 40 that a transport abnormality has occurred in the first machine 10-1 (S9). In other words, since the monitoring time after the abnormality has occurred during operation is "0 min" in the acquired alarm information F2, the alarm information F2 is reported to the monitoring apparatus 40 immediately after the alarm information F2 is acquired.

Further, processing will be described that is executed by the alarm reporting apparatus 20 when an alarm of "overcurrent" is generated in the second machine 10-2 that is stopped and corresponding alarm information F3 is generated and stored in the alarm file E2.

In this case, when the execution timing of the determination processing of the alarm reporting arrives ("YES" in S1), the machine monitoring unit 221 detects the alarm information F3 of the second machine 10-2 stored in the alarm file E2 (S2). To the alarm information F3, the alarm No. 5003 and an abnormality occurrence time "23 h 00 min 00 sec" are added as log information. When the alarm information F3 is detected, the machine monitoring unit 221 acquires the current operation status information "stopped" of the second machine 10-2 from the operation file D2 in the second machine 10-2, and also acquires information of the model x001 of the second machine 10-2.

The acquired information is sent from the machine monitoring unit 221 to the reporting necessity determination unit 222, where it is determined that the alarm information F3 is the alarm information corresponding to the information registered as to be monitored ("YES" in S3). In the reporting necessity determination unit 222, it is further determined that the alarm information F3 is the alarm information to be constantly reported ("YES" in S4).

As a result, with respect to the alarm information F3, it is determined that the alarm reporting is "necessary" (S8), and an alarm is reported by the reporting unit 223 to notify the monitoring apparatus 40 that an overcurrent has occurred in the second machine 10-2 (S9). In other words, when the overcurrent alarm information F3 is acquired, the alarm information F3 is immediately reported to the monitoring apparatus 40 even if the second machine 10-2 is stopped.

In the monitoring apparatus 40 that has received the reporting, the information of the reporting is acquired by the information processing device 43 and is output from the information output device 42 to notify an observer. Here, when the overcurrent alarm is reported, a power supply to the second machine 10-2 is cut off by the control of the monitoring apparatus 40.

During the above-mentioned processing, if alarm information that does not correspond to the information registered as to be monitored is acquired in the alarm reporting apparatus 20 ("NO" in S3), or if alarm information that is to be monitored and is to be reported only during operation is acquired but the machine is not during operation ("NO" in S5), it is determined that the alarm reporting is not necessary (S7).

According to the above-described embodiment, the alarm reporting apparatus 20 can determine and extract, with high accuracy, alarm information of high importance from among the alarm information reported from the first machine 10-1 to the fourth machine 10-4 for each combination of a model of a machine and an abnormality content based on the operation status (during operating or stopped) of the machine and the duration time of the abnormality, which is promptly reported to the monitoring apparatus 40.

In addition, when alarm information in which the abnormal state continues for a predetermined time or longer is detected, the maintenance vendor can check with an owner of the machine, which contributes to improvement of service.

In the above-described embodiment, the case is described in which the reporting setting information and the information of the monitoring time, which are set in advance for each combination of the model of the machine to be monitored and the abnormality identification information, are set in the alarm reporting apparatus 20 in advance and are used to determine the necessity of alarm reporting. However, the present embodiment is not limited to this, and the alarm information to be monitored may be set for each combination of information that can identify an arbitrary group of machines and abnormality identification information, such as for each combination of user's identification information and the abnormality identification information, or for each combination of the user's identification information, the model of the machine, and the abnormality identification information. By setting in this manner, it is possible to determine whether or not the alarm information needs to be reported according to the degree of importance that differs for each user or each model.

## Claims

1. An alarm reporting apparatus (20) connectable to a machine to be monitored, the machine being configured to generate, when an abnormality occurs, alarm information
**characterized by**
the alarm information being added with abnormality identification information for identifying a content of the abnormality and an occurrence time at which the abnormality has occurred,
the alarm reporting apparatus (20) comprising:
a monitoring alarm information storage device (21) configured to store reporting setting information for setting whether an abnormality is to be constantly reported for reporting an alarm to a monitoring apparatus (40) regardless of whether or not the machine is during operation, or the abnormality is to be reported during operation for reporting the alarm to the monitoring apparatus (40) only when the machine is during operation, the reporting setting information being set in advance for each abnormality identification information, and a monitoring time after the abnormality has occurred;
a reporting necessity determination unit (222) configured to, when an abnormality occurs in the machine to be monitored and the alarm information generated by the machine is acquired,
determine that an alarm reporting is necessary regardless of whether or not the machine is during operation if the abnormality occurring in the machine is an abnormality to be constantly reported based on the abnormality identification information added to the alarm information and the reporting setting information stored in the monitoring alarm information storage device (21),
determine that the alarm reporting is not necessary if the abnormality occurring in the machine is an abnormality to be reported during operation and the machine is not during operation based on the abnormality identification information and the occurrence time added to the alarm information, and the reporting setting information and the monitoring time stored in the monitoring alarm information storage device (21),
determine that the alarm reporting is not necessary if the abnormality occurring in the machine is an abnormality to be reported during operation, the machine is during operation, and an elapsed time from the occurrence of the abnormality has not exceeded a set monitoring time, and
determine that the alarm reporting is necessary if the abnormality occurring in the machine is an abnormality to be reported during operation, the machine is during operation, and the elapsed time from the occurrence of the abnormality has exceeded the set monitoring time; and
a reporting unit (223) configured to report the alarm to notify the monitoring apparatus (40), only when it is determined by the reporting necessity determination unit (222) that the alarm reporting is necessary, that an abnormality has occurred in the machine to be monitored.

2. The alarm reporting apparatus (20) according to Claim 1, wherein
the reporting setting information and the monitoring time stored in the monitoring alarm information storage device (21) is registered for each combination of a model of the machine to be monitored and the abnormality identification information, for each combination of user's identification information and the abnormality identification information, or for each combination of the user's identification information, the model of the machine, and the abnormality identification information, and
the reporting necessity determination unit (222) is configured to determine a necessity of reporting by using information corresponding to the acquired alarm information from among the information stored in the monitoring alarm information storage device (21).

3. The alarm reporting apparatus (20) according to Claim 1 or 2, wherein information to be stored in the monitoring alarm information storage device (21) can be registered or changed based on instruction information transmitted from the monitoring apparatus (40).

4. An alarm reporting method to be performed by an alarm reporting apparatus (20) connected to a machine to be monitored, the machine being configured to generate, when an abnormality occurs, alarm information **characterized by**
the alarm information being added with abnormality identification information for identifying a content of the abnormality and an occurrence time at which the abnormality has occurred, the alarm reporting apparatus (20) including a monitoring alarm information storage device (21) configured to store reporting setting information for setting whether an abnormality is to be constantly reported for reporting an alarm to a monitoring apparatus (40) regardless of whether or not the machine is during operation, or the abnormality is to be reported during operation for reporting the alarm to the monitoring apparatus (40) only when the machine is during operation, the reporting setting information being set in advance for each abnormality identification information, and a monitoring time after the abnormality has occurred, when an abnormality occurs in the machine to be monitored and the alarm information generated by the machine is acquired, the alarm reporting method comprising the steps of:
determining that an alarm reporting is necessary regardless of whether or not the machine is during operation if the abnormality occurring in the machine is an abnormality to be constantly reported based on the abnormality identification information added to the alarm information and the reporting setting information stored in the monitoring alarm information storage device (21);
determining that the alarm reporting is not necessary if the abnormality occurring in the machine is an abnormality to be reported during operation and the machine is not during operation based on the abnormality identification information and the occurrence time added to the alarm information, and the reporting setting information and the monitoring time stored in the monitoring alarm information storage device (21);
determining that the alarm reporting is not necessary if the abnormality occurring in the machine is an abnormality to be reported during operation, the machine is during operation, and an elapsed time from the occurrence of the abnormality has not exceeded a set monitoring time;
determining that the alarm reporting is necessary if the abnormality occurring in the machine is an abnormality to be reported during operation, the machine is during operation, and the elapsed time from the occurrence of the abnormality has exceeded the set monitoring time; and
reporting the alarm to notify the monitoring apparatus (40), only when it is determined that the alarm reporting is necessary, that an abnormality has occurred in the machine to be monitored.

## Patentansprüche

1. Warnungs-Meldevorrichtung, (20), die mit einer zu überwachenden Maschine verbunden werden kann, wobei die Maschine so konfiguriert ist, dass sie beim Auftreten einer Störung Warnungsinformationen erzeugt,
**dadurch gekennzeichnet, dass**
die Warnungsinformationen um Informationen für Störungs-Identifizierung ergänzt werden, mit denen ein Inhalt der Störung und eine Zeit identifiziert werden, zu der die Störung aufgetreten ist,
und die Warnungs-Meldevorrichtung (20) umfasst:
eine Einrichtung (21) für Speicherung von Überwachungs-Warnungsinformationen, die so konfiguriert ist, dass sie Melde-Einstellungsinformationen speichert, mit denen eingestellt wird, ob eine Störung konstant gemeldet werden soll, um, unabhängig davon, ob die Maschine in Betrieb ist, eine Warnung an eine Überwachungsvorrichtung (40) zu melden, oder ob die Störung während des Betriebes gemeldet werden soll, um die Warnung an die Überwachungsvorrichtung (40) nur dann zu melden, wenn die Maschine in Betrieb ist, wobei die Melde-Einstellungsinformationen im Voraus für jede Information für Identifizierung von Störungen eingestellt werden, und dass sie eine Überwachungszeit speichert, nachdem die Störung aufgetreten ist,
eine Einheit (222) für Feststellung der Notwendigkeit von Meldung, die so konfiguriert ist, dass sie, wenn eine Störung an der zu überwachenden Maschine auftritt und die von der Maschine erzeugten Warnungsinformationen erfasst werden, durchführt:
Feststellen, dass eine Warnungsmeldung notwendig ist, unabhängig davon, ob die Maschine in Betrieb ist, wenn die an der Maschine auftretende Störung eine Störung ist, die konstant zu melden ist, auf Basis der Informationen für Störungs-Identifizierung, um die die Warnungsinformationen ergänzt wurden, sowie der Melde-Einstellungsinformationen, die in der Einrichtung (21) für Speicherung von Überwachungs-Warnungsinformationen gespeichert sind,
Feststellen, dass die Warnungsmeldung nicht notwendig ist, wenn die an der Maschine auftretende Störung eine Störung ist, die während des Betriebes zu melden ist, und die Maschine nicht in Betrieb ist, auf Basis der Informationen für Störungs-Identifizierung sowie der Zeit des Auftretens, um die die Warnungsinformationen ergänzt wurden, und der Melde-Einstellungs-informationen sowie der Überwachungszeit, die in der Einrichtung (21) für Speicherung von Überwachungs-Warnungsinformationen gespeichert sind, Feststellen, dass die Warnungsmeldung nicht notwendig ist, wenn die an der Maschine auftretende Störung eine während des Betriebes zu meldende Störung ist, die Maschine in Betrieb ist und eine seit dem Auftreten der Störung verstrichene Zeit eine eingestellte Überwachungszeit nicht überschritten hat,
sowie
Feststellen, dass die Warnungsmeldung notwendig ist, wenn die an der Maschine auftretende Störung eine während des Betriebes zu meldende Störung ist, die Maschine in Betrieb ist und die seit dem Auftreten der Störung verstrichene Zeit die eingestellte Überwachungszeit überschritten hat, sowie
eine Melde-Einheit (223), die so konfiguriert ist, dass sie die Warnung meldet, um die Überwachungsvorrichtung (40) nur dann, wenn durch die Einheit (222) für Feststellung der Notwendigkeit von Meldung festgestellt wird, dass die Warnungsmeldung notwendig ist, darüber zu benachrichtigen, dass eine Störung an der zu überwachenden Maschine aufgetreten ist.

2. Wamungs-Meldevorrichtung (20) nach Anspruch 1 wobei
die Melde-Einstellungsinformationen und die Überwachungszeit, die in der Einrichtung (21) für Speicherung von Überwachungs-Warnungsinformationen gespeichert sind, für jede Kombination eines Modells der zu überwachenden Maschine und der Informationen für Störungs-Identifizierung, für jede Kombination von Informationen für Benutzer-Identifizierung und der Informationen für Störungs-Identifizierung oder für jede Kombination der Informationen für Benutzer-Identifizierung, des Modells der Maschine sowie der Informationen für Störungs-Identifizierung registriert werden, und
die Einheit (222) für Feststellung der Notwendigkeit von Meldung so konfiguriert ist, dass sie eine Notwendigkeit von Meldung unter Verwendung den erfassten Warnungsinformationen entsprechender Informationen von den in der Einrichtung (21) für Speicherung von Überwachungs-Warnungsinformationen gespeicherten Informationen feststellt.

3. Wamungs-Meldevorrichtung (20) nach Anspruch 1 oder 2, wobei in der Einrichtung (21) für Speicherung von Überwachungs-Warnungsinformationen zu speichernden Informationen auf Basis von der Überwachungsvorrichtung (40) übertragener Befehlsinformationen registriert oder geändert werden können.

4. Warnungs-Meldeverfahren, das von einer Warnungs-Meldevorrichtung (20) durchzuführen ist, die mit einer zu überwachenden Maschine verbunden ist, wobei die Maschine so konfiguriert ist, dass sie beim Auftreten einer Störung Warnungsinformationen erzeugt,
**dadurch gekennzeichnet, dass**
die Warnungsinformationen um Informationen für Störungs-Identifizierung ergänzt werden, mit denen ein Inhalt der Störung und eine Zeit identifiziert werden, zu der die Störung aufgetreten ist, die Wamungs-Meldevorrichtung (20) eine Einrichtung (21) für Speicherung von Überwachungs-Warnungsinformationen enthält, die so konfiguriert ist, dass sie Melde-Einstellungsinformationen speichert, mit denen eingestellt wird, ob eine Störung konstant gemeldet werden soll, um, unabhängig davon, ob die Maschine in Betrieb ist, eine Warnung an eine Überwachungsvorrichtung (40) zu melden, oder ob die Störung während des Betriebes gemeldet werden soll, um die Warnung an die Überwachungsvorrichtung (40) nur dann zu melden, wenn die Maschine in Betrieb ist, wobei die Melde-Einstellungsinformationen im Voraus für jede Information für Identifizierung von Störungen eingestellt werden, und dass sie eine Überwachungszeit speichert, nachdem die Störung aufgetreten ist, wenn eine Störung an der zu überwachenden Maschine auftritt und die von der Maschine erzeugten Warnungsinformationen erfasst werden, wobei das Warnungs-Meldeverfahren die folgenden Schritte umfasst:
Feststellen, dass eine Warnungsmeldung notwendig ist, unabhängig davon, ob die Maschine in Betrieb ist, wenn die an der Maschine auftretende Störung eine Störung ist, die konstant zu melden ist, auf Basis der Informationen für Störungs-Identifizierung, um die die Warnungsinformationen ergänzt wurden, sowie der Melde-Einstellungs-informationen, die in der Einrichtung (21) für Speicherung von Überwachungs-Warnungsinformationen gespeichert sind,
Feststellen, dass die Warnungsmeldung nicht notwendig ist, wenn die an der Maschine auftretende Störung eine Störung ist, die während des Betriebes zu melden ist, und die Maschine nicht in Betrieb ist, auf Basis der Informationen für Störungs-Identifizierung sowie der Zeit des Auftretens, um die die Warnungsinformationen ergänzt wurden, und der Melde-Einstellungs-informationen sowie der Überwachungszeit, die in der Einrichtung (21) für Speicherung von Überwachungs-Warnungsinformationen gespeichert sind,
Feststellen, dass die Warnungsmeldung nicht notwendig ist, wenn die an der Maschine auftretende Störung eine während des Betriebes zu meldende Störung ist, die Maschine in Betrieb ist und eine seit dem Auftreten der Störung verstrichene Zeit eine eingestellte Überwachungszeit nicht überschritten hat,
Feststellen, dass die Warnungsmeldung notwendig ist, wenn die an der Maschine auftretende Störung eine während des Betriebes zu meldende Störung ist, die Maschine in Betrieb ist und die seit dem Auftreten der Störung verstrichene Zeit die eingestellte Überwachungszeit überschritten hat; sowie
Melden der Warnung, um die Überwachungsvorrichtung (40) nur dann, wenn festgestellt wird, dass die Warnungsmeldung notwendig ist, darüber zu benachrichtigen, dass eine Störung an der zu überwachenden Maschine aufgetreten ist.

## Revendications

1. Appareil de signalement d'alarme (20) pouvant être connecté à une machine à surveiller, la machine étant configurée pour générer, lorsqu'une anomalie se produit, des informations d'alarme.
**caractérisé par**
l'information d'alarme est complétée par une information d'identification de l'anomalie permettant d'identifier le contenu de l'anomalie et l'heure à laquelle l'anomalie s'est produite,
l'appareil de signalement d'alarme (20) comprenant
un dispositif de stockage d'informations d'alarme de surveillance (21) configuré pour stocker des informations de réglage de rapport permettant de déterminer si une anomalie doit être constamment signalée pour signaler une alarme à un appareil de surveillance (40), que la machine soit ou non en service, ou si l'anomalie doit être signalée pendant le fonctionnement pour signaler l'alarme à l'appareil de surveillance (40) uniquement lorsque la machine est en service, les informations de réglage de rapport étant définies à l'avance pour chaque information d'identification d'anomalie, et un temps de surveillance après que l'anomalie s'est produite ;
une unité de détermination de la nécessité d'un rapport (222) configurée pour, lorsqu'une anomalie se produit dans la machine à surveiller et que l'information d'alarme générée par la machine est acquise,
déterminer qu'un rapport d'alarme est nécessaire, que la machine soit ou non en fonctionnement, si l'anomalie survenant dans la machine est une anomalie à signaler en permanence, sur la base des informations d'identification de l'anomalie ajoutées aux informations d'alarme et aux informations de réglage du rapport stockées dans le dispositif de stockage des informations d'alarme de surveillance (21),
déterminer que le rapport d'alarme n'est pas nécessaire si l'anomalie survenant dans la machine est une anomalie à signaler pendant le fonctionnement et que la machine n'est pas en service, sur la base des informations d'identification de l'anomalie et de l'heure d'occurrence ajoutées aux informations d'alarme, ainsi que des informations de réglage du rapport et de l'heure de surveillance stockées dans le dispositif de stockage des informations d'alarme de surveillance (21),
déterminer que le rapport d'alarme n'est pas nécessaire si l'anomalie survenant dans la machine est une anomalie à signaler pendant le fonctionnement, si la machine est en service et si le temps écoulé depuis l'apparition de l'anomalie n'a pas dépassé un temps de surveillance défini, et
déterminer que le rapport d'alarme est nécessaire si l'anomalie survenant dans la machine est une anomalie à signaler pendant le fonctionnement, si la machine est en service et si le temps écoulé depuis l'apparition de l'anomalie a dépassé le temps de surveillance défini ; et
une unité de signalement (223) configurée pour signaler l'alarme afin d'informer l'appareil de surveillance (40), uniquement lorsque l'unité de détermination de la nécessité du signalement (222) détermine que le signalement de l'alarme est nécessaire, qu'une anomalie s'est produite dans la machine à surveiller.

2. Appareil de signalement d'alarme (20) selon la revendication 1, dans lequel
les informations relatives au réglage du rapport et à l'heure de surveillance stockées dans le dispositif de stockage des informations d'alarme de surveillance (21) sont enregistrées pour chaque combinaison d'un modèle de machine à surveiller et des informations d'identification d'anomalie, pour chaque combinaison des informations d'identification de l'utilisateur et des informations d'identification d'anomalie, ou pour chaque combinaison des informations d'identification de l'utilisateur, du modèle de la machine et des informations d'identification d'anomalie, et
l'unité de détermination de la nécessité d'un rapport (222) est configurée pour déterminer la nécessité d'un rapport en utilisant les informations correspondant aux informations d'alarme acquises parmi les informations stockées dans le dispositif de stockage des informations d'alarme de surveillance (21).

3. Appareil de notification d'alarme (20) selon la revendication 1 ou 2, dans lequel les informations à stocker dans le dispositif de stockage des informations d'alarme de surveillance (21) peuvent être enregistrées ou modifiées sur la base des informations d'instruction transmises par l'appareil de surveillance (40).

4. Procédé de signalement d'alarme à exécuter par un appareil de signalement d'alarme (20) connecté à une machine à surveiller, la machine étant configurée pour générer, lorsqu'une anomalie se produit, des informations d'alarme.
**caractérisé par**
les informations d'alarme sont complétées par des informations d'identification d'anomalie permettant d'identifier le contenu de l'anomalie et l'heure à laquelle l'anomalie s'est produite, le dispositif de signalement d'alarme (20) comprenant un dispositif de stockage d'informations d'alarme de surveillance (21) configuré pour stocker des informations de réglage de signalement permettant de déterminer si une anomalie doit être signalée en permanence pour signaler une alarme à un appareil de surveillance (40), que la machine soit ou non en service, ou si l'anomalie doit être signalée pendant le fonctionnement pour signaler l'alarme à l'appareil de surveillance (40) uniquement lorsque la machine est en service, les informations de réglage de rapport étant définies à l'avance pour chaque information d'identification d'anomalie, et un temps de surveillance après l'apparition de l'anomalie, lorsqu'une anomalie se produit dans la machine à surveiller et que l'information d'alarme générée par la machine est acquise, le procédé de signalement d'alarme comprenant les étapes suivantes:
déterminer qu'un rapport d'alarme est nécessaire, que la machine soit ou non en service, si l'anomalie survenant dans la machine est une anomalie à signaler en permanence, sur la base des informations d'identification de l'anomalie ajoutées aux informations d'alarme et aux informations de réglage du rapport stockées dans le dispositif de stockage des informations d'alarme de surveillance (21) ;
déterminer que le rapport d'alarme n'est pas nécessaire si l'anomalie survenant dans la machine est une anomalie à signaler pendant le fonctionnement et que la machine n'est pas en service, sur la base des informations d'identification de l'anomalie et de l'heure d'apparition ajoutée aux informations d'alarme, ainsi que des informations de réglage du rapport et de l'heure de surveillance stockées dans le dispositif de stockage des informations d'alarme de surveillance (21) ;
déterminer que le signalement de l'alarme n'est pas nécessaire si l'anomalie survenant dans la machine est une anomalie à signaler pendant le fonctionnement, si la machine est en service et si le temps écoulé depuis l'apparition de l'anomalie n'a pas dépassé une durée de surveillance définie ;
déterminer que le rapport d'alarme est nécessaire si l'anomalie survenant dans la machine est une anomalie à signaler pendant le fonctionnement, si la machine est en service et si le temps écoulé depuis l'apparition de l'anomalie a dépassé le temps de surveillance défini ; et
signaler l'alarme pour informer l'appareil de surveillance (40), uniquement lorsque l'on détermine que le signalement de l'alarme est nécessaire, qu'une anomalie s'est produite dans la machine à surveiller.
